# EUROPÄISCHE PATENTSCHRIFT

(11) **EP 0 469 171 B1**
(45) Veröffentlichungstag und Bekanntmachung des Hinweises auf die Patenterteilung: **07.07.1993**
(21) Anmeldenummer: 90114811.4
(22) Anmeldetag: 02.08.1990
(51) Int. Cl.: F01N 7/10

(54) **Abgasleitung für eine aufgeladene, mehrzylindrige Brennkraftmaschine**
Exhaust conduit for supercharged multicylinder engines
Conduit d'échappement pour moteurs à combustion interne multicylindres suralimentés

(43) Veröffentlichungstag der Anmeldung: 05.02.1992
(73) Patentinhaber: MTU MOTOREN- UND TURBINEN-UNION FRIEDRICHSHAFEN GMBH, D-88040 Friedrichshafen (DE)
(72) Erfinder: Deutschmann, Herbert, Dr., D-7990 Friedrichshafen 1 (DE); Donauer, Georg, D-7990 Friedrichshafen 5 (DE)

(56) Entgegenhaltungen:
- DE-A- 3 815 408
- DE-C- 810 554
- GB-A- 2 168 426
- US-A- 2 858 667
- US-A- 4 179 884
- US-A- 4 644 747
- PATENT ABSTRACTS OF JAPAN vol. 9, no. 311 (M-436)(2034) 07 Dezember 1985,& JP-A-60 145422 (NISSAN JIDOSHA) 31 Juli 1985,

## Beschreibung

Die Erfindung bezieht sich auf eine Abgasleitung für eine aufgeladene, mehrzylindrige Brennkraftmaschine nach dem Oberbegriff von Patentanspruch 1. Mit einer eingekapselten Abgasleitung wird erreicht, daß das Abgas auf dem Wege vom Zylinder zum Aufladeaggregat nur einen mimimalen Wärmeverlust erleidet und damit ein höheres Energiepotential für die Aufladung der Brennkraftmaschine zur Verfügung steht. Zudem ist die Oberflächentemperatur der Abgasleitung nie höher als die Kühlwassertemperatur der Brennkraftmaschine, was für manche Anwendungen erfüllt sein muß.

Eine aus der US-PS 4 179 884 bekannte, gattungsgemäße Abgasleitung besteht aus einer Schweißkonstruktion, die einen hohen Herstellungsaufwand erfordert. Die Abstützung der Abschnitte der inneren Leitung dieser Abgasleitung erfolgt ringförmig über Bunde an der Innenwand des Kühlwasserraumes. Die unvermeidliche axiale Wärmedehnung der Abschnitte der inneren Leitung bei jeder Inbetriebnahme der Brennkraftmaschine ergibt Reibverschleiß im Kontaktbereich zwischen den Bunden und der Innenwand des Kühlwasserraumes. Durch die gleichfalls auftretende radiale Wärmedehnung der Bunde der inneren Leitung wird die Innenwand des Kühlwasserraumes unkontrollierbar mit Radialkräften belastet. Die Dauerhaltbarkeit der bekannten Abgasleitung ist aus diesen Gründen unzureichend.

Es ist deshalb Aufgabe der Erfindung eine Abgasleitung für eine aufgeladene, mehrzylindrige Brennkraftmaschine zu schaffen, die eine einfache und wirtschaftliche Herstellbarkeit mit beanspruchungsgerechter Konstruktion verbindet.

Diese Aufgabe ist erfindungsgemäß mit den kennzeichnenden Merkmalen von Patentanspruch 1 gelöst. Die vorteilhafte weitere Ausgestaltung der Erfindung ergibt sich mit den Merkmalen der Ansprüche 2 bis 16.

Die mit der Erfindung erzielten Vorteile bestehen insbesondere darin, daß die schweißnahtfreie Montage der Abgasleitung die funktionsgerechte Auswahl der Werkstoffe für Mantel, Zwischenwand und innere Leitung ohne Rücksicht auf Schweißeigenschaften ermöglicht, daß die glatt-zylindrische Ausbildung von Mantel und innerer Leitung die wirtschaftliche Verwendung von handelsüblichem Halbzeug erlaubt, daß die als Gußstück herstellbare Zwischenwand infolge des einfachen Formenbaues kostengünstig herstellbar ist, daß durch die Anordnung der Anschlußstücke die Abgasleitung auch als Nachrüstung oder zum Austausch an Brennkraftmaschinen älterer Bauart ohne Mehrkosten verwendbar ist, daß die Abgasleitung ein besonders geringes Bauvolumen aufweist und daß eine einfache Austauschbarkeit aller Verschleißteile gegeben ist.

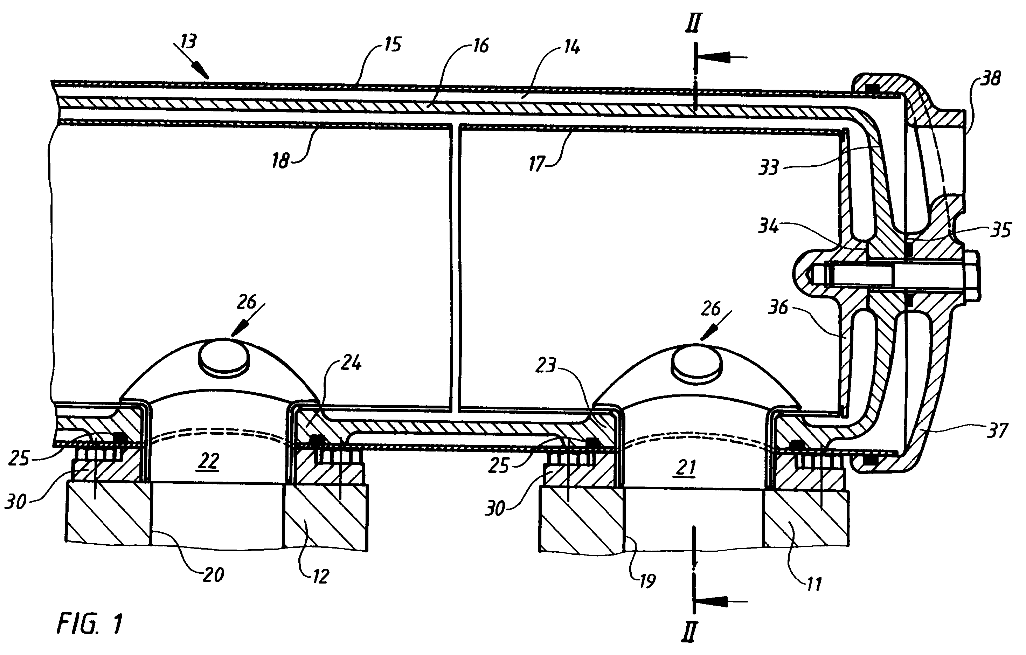

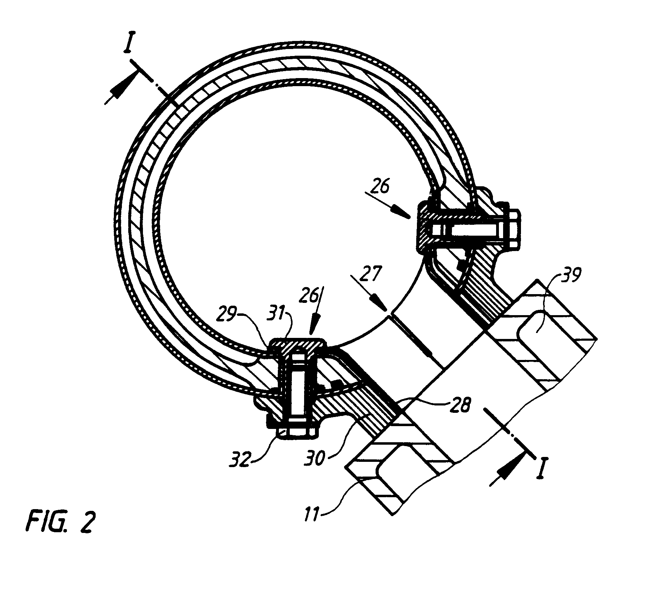

Ein Ausführungsbeispiel der Erfindung ist in der Zeichnung dargestellt und wird nachstehend beschrieben. Es zeigt
- Fig. 1: Längsschnitt eines Endes einer Abgasleitung nach Linie I-I in Fig. 2
- Fig. 2: Querschnitt der Abgasleitung nach Linie II-II in Fig. 1

An den Zylinderköpfen 11, 12 einer nicht weiter dargestellten aufgeladenen, mehrzylindrigen Brennkraftmaschine ist eine Abgasleitung 13 befestigt, die sich über alle Zylinder einer Reihe erstreckt. Die Abgasleitung 13 besteht aus einer die heißen Abgase führenden inneren Leitung und einem die innere Leitung mit Abstand umgebenden in Längs- und Querrichtung ungeteilten, einen Kühlwasserraum 14 aufweisenden Gehäuse.

Der Kühlwasserraum 14 des Gehäuses ist zwischen einem zylindrischen Mantel 15 und einer etwa zylindrischen Zwischenwand 16 ausgebildet.

Die innere Leitung ist etwa im Zylinderabstand in einzelne Abschnitte 17, 18 unterteilt. An jedem Abschnitt 17, 18 der inneren Leitung ist ein mit dem zugeordneten Zylinderauslaßkanal 19, 20 korrespondierender Abgaseintritt 21, 22 ausgebildet. Die Wand eines jeden Abschnittes 17, 18 der inneren Leitung weist einen achsparallelen, etwa mittig zu den Abgaseintritten 21, 22 verlaufenden Schlitz 27 auf.

Die zylindrische Zwischenwand 16 ist im Bereich um jeden Abgaseintritt 21, 22 herum radial nach innen und außen zu einem zylindrisch gebogenen Flansch 23, 24 verdickt.

Auf der Innenkontur eines jeden Flansches 23, 24 stützt sich der zugeordnete Abschnitt 17, 18 der inneren Leitung ab. Auf der Außenkontur aller Flansche 23, 24 der Zwischenwand 16 liegt der zylindrische Mantel 15 an. Zur Abdichtung des Kühlwasserraumes 14 ist bei jedem Abgaseintritt 21, 22 zwischen Mantel 15 und Flansch 23, 24 ein Dichtring 25 angeordnet, der in eine in den Flansch 23, 24 eingearbeitete Nut eingelegt ist.

An jedem Flansch 23, 24 der zylindrischen Zwischenwand 16 sind in Querrichtung zur Abgasleitung 21, 22 Befestigungseinrichtungen 26 für den zylindrischen Mantel 15 und die jeweils zugehörigen Abschnitte 17, 18 der inneren Leitung angeordnet.

Die der Befestigung dienenden Bohrungen in der Wand eines jeden Abschnitts 17, 18 der inneren Leitung haben im unmontierten Zustand einen geringeren Abstand zueinander, als die Aufnahmen der Befestigungseinrichtung 26 in Flansch 23, 24. Bei der Montage der Abschnitte 17, 18 ist zwangsläufig eine Aufweitung des Schlitzes 27 erforderlich. Im montierten Zustand steht jeder Abschnitt 17, 18 dadurch unter elastischer Vorspannung, die sich bis zum Erreichen der Betriebstemperatur infolge der Wärmedehnung abbaut und nach Abkühlung wieder einstellt.

Jeder Abgaseintritt 21, 22 ist mit einer zweiteiligen, einen umlaufenden Kragen 29 aufweisenden Hülse 28 ausgekleidet. Die Trennfuge der zweiteiligen Hülse 28 verläuft in der Flucht des Schlitzes 27 in den Abschnitten 17, 18 der inneren Leitung. Der an der Hülse 28 angeformte Kragen 29 ist der Innenkontur des zugeordneten Abschnittes 17 oder 18 der inneren Leitung angepaßt und weist mit den Befestigungseinrichtungen 26 zusammenwirkende Bohrungen auf.

Im Bereich eines jeden Zylinderauslaßkanals 19, 20 ist am Zylinderkopf 11, 12 ein Anschlußstück 30 befestigt, das eine dem zylindrischen Mantel 15 der Abgasleitung 13 angepaßte sattelförmige Aufnahme aufweist. Zur Befestigung der Abgasleitung 13 sind im Anschlußstück 30 Bohrungen angeordnet, die mit den Befestigungseinrichtungen 26 zusammenwirken. Die Anschlußstücke 30 können auch als Teil des Zylinderkopfes 11, 12 augebildet sein. Außerdem können die Anschlußstücke 30 auch Kühlkanäle und Einrichtungen für die Verbindung des Kühlwasserraumes 14 mit den Kühlwasserkanälen 39 der zugeordneten Zylinderköpfe 11, 12 aufweisen.

Jede Befestigungseinrichtung 26 besteht aus einer Hohlschraube 31 mit einem Linksgewinde außen und einem Rechtsgewinde innen sowie einer Kopfschraube 32. Die Hohlschraube 31 wird von der inneren Leitung aus durch den Kragen 29 und die Wand des Abschnittes 17, 18 hindurch in das entsprechende Linksgewinde im Flansch 23, 24 fest eingeschraubt. Das gewindelose Ende der Hohlschraube 31 ragt dann ein wenig über den zylindrischen Mantel 15 hervor, so daß sich die soweit vormontierte Abgasleitung 13 auf die bereits am Zylinderkopf 11, 12 befestigten Anschlußstücke 30 aufsetzen läßt. Die Kopfschrauben 32 werden dann durch die Anschlußstücke 30 hindurch in das Innengewinde der Hohlschraube 31 eingeschraubt.

Das eine Ende der zylindrischen Zwischenwand 16 ist durch eine Stirnwand 33, die beiderseits zentrale Montageflächen 34, 35 aufweist, verschlossen. An der inneren Montagefläche 34 ist eine Platte 36 befestigt, mit der das eine Ende des Abschnitts 17 der inneren Leitung abgedeckt ist.

Auf der wasserseitigen Oberfläche der Zwischenwand 16 können zur Verbesserung der Wasserführung im Kühlwasserraum 14 Wasserleitrippen (nicht dargestellt) ausgebildet sein.

An der äußeren Montagefläche 35 ist ein den zylindrischen Mantel 15 außen abgedichtet übergreifender Deckel 37 befestigt, der den Kühlwasserraum 14 endseitig begrenzt. Im Deckel 37 ist mindestens eine Anschlußeinrichtung 38 für die Zu- oder Abfuhr von Kühlwasser für den Kühlwasserraum 14 ausgebildet.

## Patentansprüche

1. Abgasleitung (13) für eine aufgeladene, mehrzylindrige Brennkraftmaschine mit einer die heißen Abgase führenden inneren Leitung sowie einem die innere Leitung mit Abstand umgebenden, in Längs- und Querrichtung ungeteilten, einen Kühlwasserraum (14) aufweisenden Gehäuse, wobei der Kühlwasserraum (14) des Gehäuses zwischen einem zylindrischen Mantel (15) und einer etwa zylindrischen Zwischenwand (16) ausgebildet ist und die innere Leitung etwa im Zylinderabstand der Brennkraftmaschine in einzelne Abschnitte (17, 18) unterteilt ist, wobei jedem Abschnitt (17, 18) der inneren Leitung ein mit dem Zylinderauslaßkanal (19, 20) korrespondierender Abgaseintritt (21, 22) zugeordnet ist, dadurch gekennzeichnet, daß die Zwischenwand (16) im Bereich eines jedem Abgaseintritts (21, 22) radial nach innen und außen zu einem zylindrisch gebogenen Flansch (23, 24) verdickt ist, daß sich jeder Abschnitt (17, 18) der inneren Leitung jeweils auf der Innenkontur eines Flansches (23, 24) abstützt, daß der Mantel (15) an den Außenkonturen aller Flansche (23, 24) mit Hilfe von Dichtmitteln (25) abgedichtet anliegt und daß an jedem Flansch (23, 24) in Querrrichtung zur Abgasleitung (13) beiderseits des Abgaseintritts (21, 22) mindestens eine Befestigungseinrichtung (26) für den Mantel (15) und den jeweils zugeordneten Abschnitt (17, 18) der inneren Leitung angeordnet ist.

2. Abgasleitung nach Anspruch 1, dadurch gekennzeichnet, daß die Wand eines jeden Abschnitts (17, 18) der inneren Leitung einen achsparallelen, etwa mittig zu den Abgaseintritten (21, 22) verlaufenden Schlitz (27) aufweist.

3. Abgasleitung nach Anspruch 1, dadurch gekennzeichnet, daß jeder Abgaseintritt (21, 22) durch eine zweiteilige, einen Kragen (29) aufweisende Hülse (28) ausgekleidet ist.

4. Abgasleitung nach Anspruch 3, dadurch gekennzeichnet, daß die Trennfuge der zweiteiligen Hülse (28) parallel zum Schlitz (27) des zugeordneten Abschnitts (17, 18) der inneren Leitung angeordnet ist.

5. Abgasleitung nach Anspruch 3, dadurch gekennzeichnet, daß der an der Hülse (28) angeformte Kragen (29) mit den Befestigungseinrichtungen (26) zusammenwirkende Bohrungen aufweist.

6. Abgasleitung nach Anspruch 1, dadurch gekennzeichnet, daß im Bereich eines jeden Zylinderauslaßkanals (19, 20) an den Zylinderköpfen (11, 12) ein Anschlußstück (30) mit sattelförmiger Aufnahme für die Abgasleitung (13) angeordnet ist.

7. Abgasleitung nach Anspruch 6, dadurch gekennzeichnet, daß die Anschlußstücke (30) und die Zylinderköpfe (11, 12) einteilig ausgebildet sind.

8. Abgasleitung nach Anspruch 6, dadurch gekennzeichnet, daß die Anschlußstücke (30) abnehmbar am Zylinderkopf (11, 12) befestigt sind.

9. Abgasleitung nach Anspruch 6, dadurch gekennzeichnet, daß die sattelförmige Aufnahme des Anschlußstückes (30) mit den Befestigungseinrichtungen (26) korrespondierende Bohrungen aufweist.

10. Abgasleitung nach Anspruch 1, dadurch gekennzeichnet, daß jede Befestigungseinrichtung (26) aus einer von der inneren Leitung aus in den Flansch (23, 24) mit Linksgewinde einschraubbaren Hohlschraube (31) und einer von der Außenseite des Anschlußstückes (30) in das Innengewinde der Hohlschraube (31) einschraubbaren Kopfschraube (32) besteht.

11. Abgasleitung nach Anspruch 1, dadurch gekennzeichnet, daß an einem Ende der zylindrischen Zwischenwand (16) eine Stirnwand (33) mit zentralen Montageflächen (34, 35) ausgebildet ist.

12. Abgasleitung nach Anspruch 1, dadurch gekennzeichnet, daß auf der wasserseitigen Oberfläche der Zwischenwand (16) Wasserleitrippen ausgebildet sind.

13. Abgasleitung nach Anspruch 11, dadurch gekennzeichnet, daß ein den zylindrischen Mantel (15) abgedichtet übergreifender Deckel (37) außen an der Montagefläche (35) der Stirnwand (33) der zylindrischen Zwischenwand (16) befestigt ist.

14. Abgasleitung nach Anspruch 13, dadurch gekennzeichnet, daß der Deckel (37) einen Anschluß (38) für Zu- oder Abfuhr von Kühlwasser für den Kühlwasserraum (14) aufweist.

15. Abgasleitung nach Anspruch 6, dadurch gekennzeichnet, daß jedes Anschlußstück (30) einen Kühlkanal und eine Einrichtung zur Verbindung des Kühlwasserraumes (14) mit einem Kühlkanal (39) des Zylinderkopfes (11, 12) aufweist.

16. Abgasleitung nach Anspruch 11, dadurch gekennzeichnet, daß eine den Querschnitt des Abschnittes (17) der inneren Leitung stirnseitig abdeckende Platte (36) innen an der zentralen Montagefläche (35) der Stirnwand (33) der zylindrischen Zwischenwand (16) befestigt ist.

## Claims

1. Exhaust pipe (13) for a supercharged multicylinder internal combustion engine having an inner pipe to duct the hot exhaust gases and a longitudinally and transversely solid casing enveloping the inner pipe at a distance and containing a cooling water compartment (14), where the cooling water compartment (14) of the casing is formed between a cylindrical shroud (15) and an approximately cylindrical partition (16) and the inner pipe is subdivided into separate sections (17, 18) approximately reflecting the cylinder spacing of the IC engine, with each section (17, 18) of the inner pipe being associated with an exhaust inlet (21, 22) corresponding to the cylinder exhaust duct (19, 20), characterized in that the partition (16) thickens radially inward and outward in the area of each exhaust gas inlet (21, 22) to form a cylindrically radiused flange (23, 24), in that each section (17, 18) of the inner pipe lodges against the inner contour of a flange (23, 24) each, in that the shroud (15) abuts on the outer contours of all flanges (23, 24) to achieve sealing action with the aid of sealing means (25) and in that at least one fastening means (26) for the shroud (15) and the respective associated section (17, 18) of the inner pipe is arranged on each flange (23, 24) in a direction transverse to the exhaust pipe (13) on either side of the exhaust gas inlet (21, 22).

2. Exhaust pipe of Claim 1, characterized in that the wall of each section (17, 18) of the inner pipe has an axially parallel slot (27) extending approximately centrally in respect of the exhaust gas inlets (21, 22).

3. Exhaust pipe of Claim 1, characterized in that each exhaust gas inlet (21, 22) is lined with a two-piece sleeve (28) exhibiting a collar (29).

4. Exhaust pipe of Claim 3, characterized in that the parting line of the two-piece sleeve (28) is arranged in parallel with the slot (27) of the associated section (17, 18) of the inner pipe.

5. Exhaust pipe of Claim 3, characterized in that the collar (29) formed on the sleeve (28) has holes cooperating with the fastening means (26).

6. Exhaust pipe of Claim 1, characterized in that a connecting piece (30) having a saddle-shaped seat for the exhaust pipe (13) is arranged on the cylinder heads (11, 12) in the area of each cylinder exhaust duct (19, 20).

7. Exhaust pipe of Claim 6, characterized in that the connecting pieces (30) and the cylinder heads (11, 12) are solid constructions.

8. Exhaust pipe of Claim 6, characterized in that the connecting pieces (30) are separably attached to the cylinder head (11, 12).

9. Exhaust pipe of Claim 6, characterized in that the saddle-shaped seat of the connecting piece (30) has holes corresponding to the fastening means (26).

10. Exhaust pipe of Claim 1, characterized in that each fastening means (26) consists of a banjo bolt (31) engaging with a left-hand thread from the inner pipe into the flange (23, 24) and of a cap screw (32) engaging from the outside of the connecting piece (30) into the female thread of the banjo bolt (31).

11. Exhaust pipe of Claim 1, characterized in that an end wall (33) is formed on one end of the cylindrical partition (16) and has centrally arranged assembly faces (34, 35).

12. Exhaust pipe of Claim 1, characterized in that water baffles are formed on the water-wetted surface of the partition (16).

13. Exhaust pipe of Claim 11, characterized in that a sealing cover (37) extending across the cylindrical shroud (15) is attached externally to the assembly face (35) of the end wall (33) of the cylindrical partition (16).

14. Exhaust pipe of Claim 13, characterized in that the cover (37) has a connection (38) for the supply or discharge of cooling water for the cooling water compartment (14).

15. Exhaust pipe of Claim 6, characterized in that each connecting piece (30) has a cooling duct and means for connecting the cooling water compartment (14) to a cooling duct (39) of the cylinder head (11, 12).

16. Exhaust pipe of Claim 11, characterized in that a plate (36) covering the cross-section of the section (17) of the inner pipe at the face end is internally attached to the central assembly face (35) of the end wall (33) of the cylindrical partition (16).

## Revendications

1. Circuit (13) pour les gaz d'échappement d'un moteur à combustion interne multicylindre suralimenté, comprenant un conduit intérieur qui guide les gaz d'échappement chauds, et un carter qui entoure à distance le conduit intérieur, ledit carter n'étant pas divisé en direction longitudinale et en direction transversale et présentant une cavité (14) pour de l'eau de refroidissement, dans lequel ladite cavité (14) du carter est formée entre une chemise cylindrique (15) et une paroi intermédiaire (16) approximativement cylindrique et le conduit intérieur est subdivisé en tronçons individuels (17, 18) approximativement suivant l'écartement des cylindres du moteur, une pipe d'entrée de gaz (21, 22) qui correspond au canal de sortie (19, 20) du cylindre étant associée à chaque tronçon (17, 18) du conduit intérieur, caractérisé en ce que la paroi intermédiaire (16) est épaissie radialement vers l'intérieur et vers l'extérieur dans la région de chaque pipe d'entrée (21, 22) en formant une bride (23, 24) incurvée cylindriquement, en ce que chaque tronçon (17, 18) du conduit intérieur s'appuie sur le contour intérieur d'une bride respective (23, 24), en ce que la chemise (15) est appliquée de façon étanche sur les contours extérieurs de toutes les brides (23, 24) à l'aide d'organes d'étanchéité, et en ce qu'au moins un dispositif de fixation (26) pour la chemise (15) et pour le tronçon associé respectif (17, 18) du conduit intérieur est agencé sur chaque bride (23, 24) en direction transversale du circuit (13) de part et d'autre de la pipe d'entrée (21, 22).

2. Circuit pour gaz d'échappement (13) selon la revendication 1, caractérisé en ce que la paroi de chaque tronçon (17, 18) du conduit intérieur comporte une fente (27) qui s'étend parallèlement à l'axe et approximativement au milieu par rapport aux pipes d'entrée (21, 22).

3. Circuit pour gaz d'échappement (13) selon la revendication 1, caractérisé en ce que chaque pipe d'entrée (21, 22) est recouverte par un fourreau (29) en deux parties doté d'une collerette (29).

4. Circuit pour gaz d'échappement (13) selon la revendication 3, caractérisé en ce que le joint de séparation du fourreau en deux parties (28) est disposé parallèlement à la fente (27) du tronçon (17, 18) associé du conduit intérieur.

5. Circuit pour gaz d'échappement (13) selon la revendication 3, caractérisé en ce que la collerette (29) formée sur le fourreau (28) comporte des perçages qui coopèrent avec les dispositifs de fixation (26).

6. Circuit pour gaz d'échappement (13) selon la revendication 1, caractérisé en ce qu'il est prévu une pièce de raccordement (30) dans la région de chaque canal de sortie (19, 20) des cylindres et sur les têtes de cylindres (11, 12), cette pièce de raccordement comportant un logement en forme de selle pour le circuit d'échappement (13).

7. Circuit pour gaz d'échappement (13) selon la revendication 6, caractérisé en ce que les pièces de raccordement (30) et les têtes de cylindres (11, 12) sont réalisées d'une seule pièce.

8. Circuit pour gaz d'échappement (13) selon la revendication 6, caractérisé en ce que les pièces de raccordement (30) sont fixées de manière démontable sur la tête de cylindre (11, 12).

9. Circuit pour gaz d'échappement (13) selon la revendication 6, caractérisé en ce que le logement en forme de selle de la pièce de raccordement (30) comporte des perçages qui correspondent aux dispositifs de fixation (26).

10. Circuit pour gaz d'échappement (13) selon la revendication 1, caractérisé en ce que chaque dispositif de fixation (26) comprend une vis creuse (31) à pas à gauche qui peut être vissée dans la bride (23, 24) depuis le conduit intérieur et une vis à tête (32) qui peut être vissée dans le taraudage intérieur de la vis creuse (31) depuis le côté extérieur de la pièce de raccordement (30).

11. Circuit pour gaz d'échappement (13) selon la revendication 1, caractérisé en ce qu'il est formé une paroi frontale (33) pourvue de surfaces de montage centrales (34, 35), à une extrémité de la paroi intermédiaire cylindrique (16).

12. Circuit pour gaz d'échappement (13) selon la revendication 1, caractérisé en ce que des nervures de guidage d'eau sont formées sur la surface côté eau de la paroi intermédiaire (16).

13. Circuit pour gaz d'échappement (13) selon la revendication 11, caractérisé en ce qu'un couvercle (37) qui recouvre avec étanchéité la chemise cylindrique (15) est fixé à l'extérieur sur la surface de montage (35) de la paroi frontale (33) de la paroi intermédiaire cylindrique (16).

14. Circuit pour gaz d'échappement (13) selon la revendication 13, caractérisé en ce que le couvercle (37) comprend un raccord (38) pour l'alimentation ou l'évacuation d'eau de refroidissement dans la cavité d'eau de refroidissement (14).

15. Circuit pour gaz d'échappement (13) selon la revendication 6, caractérisé en ce que chaque raccord (30) comprend un canal de refroidissement et des organes pour le raccordement de la cavité d'eau de refroidissement (14) avec un canal de refroidissement (39) de la tête de cylindre (11, 12).

16. Circuit pour gaz d'échappement (13) selon la revendication 11, caractérisé en ce qu'une plaque (36) qui recouvre côté frontal la section du tronçon (17) du conduit intérieur est fixée à l'intérieur sur la surface de montage centrale (35) de la paroi frontale (33) de la paroi intermédiaire cylindrique (16).
